# EUROPEAN PATENT APPLICATION

(11) **EP 3 211 379 A1**
(43) Date of publication of application: **30.08.2017**
(21) Application number: 16157653.3
(22) Date of filing: 26.02.2016
(51) Int. Cl.: G01D 5/14, E05B 47/00

(54) **AN ANGULAR POSITION DETECTOR**

(71) Applicant: Verisure Innovation AB, 201 23 Malmö (SE); Mikrodust AB, 223 70 Lund (SE)
(72) Inventor: LANDAHL, Henrik, SE-24633 LÖDDEKÖPINGE (SE); KRISTENSSON, Daniel, SE-26193 SAXTORP (SE); IDERUP, Mats, SE-22655 LUND (SE)
(74) Representative: Persson, Albin

(57) **Abstract**

An angular position detector (11) adapted for a rotating member (20) rotating around an axis, said angular position detector (11) comprising a magnet device (48) and a magnetic sensor (50). The angular position detector (11) comprises at least one first magnetic sensor (50) and a magnetic member (24) rotating together with said rotating member (20). Said magnetic member (24) is provided with at least a first radially extending protrusion (44) and a second radially extending protrusion (46) arranged in a fixed angular relationship to each other. Said at least one first magnetic sensor (50) outputs an electrical signal in response to sensing a magnetic flux originating from said magnetic device (48) and extending through said magnetic member (24).

## Description

### TECHNICAL FIELD

The invention relates to an angular position detector. The detector can be used for detecting handle positions use in doors and windows.

### PRIOR ART

Current handle position sensors use mechanical switches as part of their sensing mechanism to determine the positional state of the handle or locking mechanism. An impulse washer or similar device mounted on a rotating element engage a switch when the handle is in a predefined position. These mechanical switches are susceptible to breaking and have short lives because they physically contact other mechanical components. Normally, they are also fragile and difficult to assembly. Dust may cause problems during operation.

Other handle position sensors use a light emitting device, such as an infrared light emitting diode (IR LED) in combination with an IR light sensor. A light opening or a light obstacle associated to a moving or rotating element will change the amount of light received by the IR light sensor depending on the position of the handle. Sensors based on optical devices suffer from problems relating to ambient light and/or light leakage. Friction and wear will shorten the expected life of the sensor.

Some of the above mentioned problems can be overcome by a handle position sensor using a fixed magnetic sensor and a moving or rotating magnet. A door latch position sensor based on magnetic devices is disclosed in US20070126577. The door latch position system includes a magnet on a wheel that fits over the hub of the latch and a Hall effect sensor with a circuit board that is mounted on the vehicle body.

### SUMMARY OF THE INVENTION

In accordance with the invention at least one specific rotational position of a rotating member is detected by a magnetic sensor arranged in a fixed angular relationship to a magnetic device. The detection is made as a result of a magnetic member guiding in said at least one specific rotational position a magnetic flux originating from said magnetic device and extending through said magnetic member to said magnetic sensor. In this context a magnetic member is a member that conveys or guides a magnetic flux.

In various embodiments the magnetic member is formed as or being a part of a washer or a ring. The magnetic member can be provided with at least two protrusions extending radially from an axis of rotation of said rotating member at a fixed angular relationship. The magnetic member can be received in a supporting circular disc or similar device made from a non-magnetic material.

In various embodiments the magnetic member is formed as an insertion in a washer or disc. The insertion has a shape and extension sufficient to guide the magnetic flux from the magnetic device to the magnetic sensor at one specific rotational position of the washer or disc. In various embodiments the magnetic sensor is fixed at an angular distance of 90° from the magnetic device and the magnetic member having the shape of a circle sector covering approximately 90° of a circle.

By providing more than one magnetic sensor and arranging the magnetic sensor at fixed angles to each other and to the magnetic device it is possible to detect different rotational positions of the rotating member. In various embodiments one angular position corresponds to a locked position of a window or door handle while other angular positions may reflect an unlocked position or an open position. Magnetic sensor will detect the magnetic field strength and can be used to indicate presence or absence of a magnetic field.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic perspective view of a first prior art handle,
- Fig. 2: is a schematic perspective view of a second prior art handle,
- Fig. 3: is a schematic perspective view of a handle comprising a first embodiment of an angular position detector in accordance with the invention,
- Fig. 4: is a schematic side elevation view of a part of the handle shown in Fig. 3,
- Fig. 5: is a schematic diagram showing a basic embodiment of an angular position detector in accordance with the invention,
- Fig. 6: is a schematic diagram showing a further embodiment of an angular position detector in accordance with the invention using two magnetic detectors,
- Fig. 7: is a schematic diagram showing a various embodiments of an angular position detector in accordance with the invention using two or more magnetic detectors,
- Fig. 8-11: shows different rotational angles of the angular position detector of Fig. 6,
- Fig. 12: are two schematic diagrams showing signals generated in two magnetic detectors of the angular position detector of Fig. 6 at different rotational angles,
- Fig. 13: is a schematic perspective view of an alternative embodiment of a washer included in an angular position detector in accordance with the invention,
- Fig. 14: is a schematic perspective view of a further alternative embodiment of a washer and
- Fig. 15: is a schematic top view of a further alternative embodiment of a washer.

### DETAILED DESCRIPTION

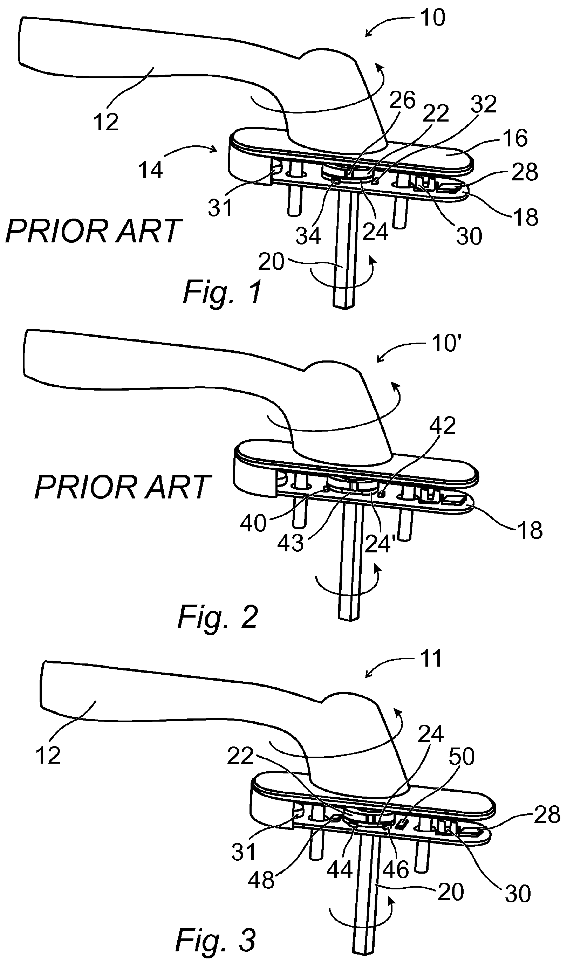

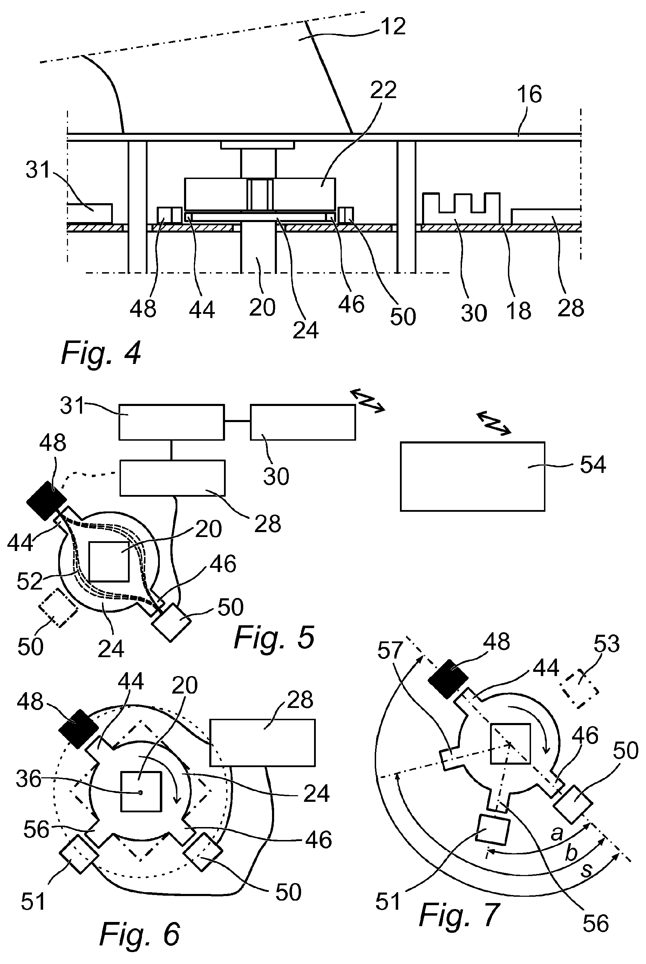

The prior art embodiment of a window handle 10 shown in Fig. 1 comprises a handle 12 and a hatch 14 with a cover 16 and a base 18. The handle 12 engages a spindle 20 that will rotate around an axis when the handle 12 is rotated to open or to close the window. The spindle 20 supports a circular plate 22 and a washer 24 that both are formed with a central opening receiving the spindle 20, c.f. Fig. 4. The circular plate 22 and the washer 24 will rotate together with the spindle 20 when the handle 12 is rotated. A recess 26 on the circular plate 22 is used to interact with a spring biased element (not shown) to produce a clicking sound when the handle is in a locked position.

The window handle shown in Fig. 1 is provided with a handle position sensor connected to a control unit 28 and a radio unit 30. When the handle position sensor produces a signal indicative of the locked position the signal is received by the control unit 28 and a corresponding radio signal is transmitted to central unit, for instance included in a home alarm system. Elements and components described above with reference to Fig. 1 are included also in other prior art embodiments and embodiments in accordance the present invention as disclosed below.

The window handle shown in Fig. 1 is provided with a switch 32 that is actuated by a tooth 34 radially extending from the washer 24 when handle 12 and washer 24 are rotated. Normally, the position of the switch 32 and the position of the tooth 34 are chosen so as to provide an indication by a signal from the switch when the handle is in a locked position. A power source 31, such as a battery, is provided for electric and electronic components of the control unit 28, the radio unit 30 and the switch 32.

The prior art window handle 10' shown in Fig. 2 is very similar to the handle 10 shown in Fig. 1. However, a mechanical switch is omitted and instead a combination of an infrared light emitting diode (IR LED) 40 and an IR light sensor 42 is used. The IR LED 40 is attached to the base 18 outside but close to a perimeter of the washer 24'. The IR light sensor 42 also is attached to the base 18 outside but close to a perimeter of the washer 24'. A chord 43 formed by an indentation of the washer 24' will provide a free line of sight between the IR LED 40 and the IR light sensor 42 when the handle is in a predetermined position, for instance when the handle is in the locked position. In other embodiments a light opening formed in the washer 24' will change the amount of light received by the IR light sensor depending on the position of the handle.

Fig. 3 shows a window handle 11 comprising a first embodiment of an angular position detector in accordance with the invention. Basic elements of the window handle 11 correspond to elements of the window handle described above with reference to Fig. 1. The window handle 11 shown in Fig. 1 comprises a circular washer 24 having at least a first radially extending protrusion 44 and a second radially extending protrusion 46, c.f. Fig. 5 and Fig. 6. The first radially extending protrusion 44 and a second radially extending protrusion 46 are arranged in a fixed angular relationship to each other, c.f. Fig. 7. The washer 24 and the circular plate 22 enclose the spindle 20.

In accordance with the invention a magnetic device 48 and a magnetic sensor 50 are arranged outside the perimeter of the washer 24 including the protrusions 44, 46. As a result the protrusions 44, 46 will pass by in close vicinity the magnetic device 48 and the magnetic sensor 50 when the spindle 20 and washer 24 are rotated. The magnetic device 48 and the magnetic sensor 50 are displaced by a fixed angle around the axis of the spindle 20. When a first protrusion is in line with the magnetic device 48 and a second protrusion is in line with the magnetic sensor 50 there will be a peak in the magnetic field detected by the magnetic sensor 50. As a result discrete angular positions of the washer 24 are readily detected. Also intermediate angular positions can be detected by providing more than two protrusions and more than one magnetic sensor, c.f. Fig. 6 and Fig. 7. The magnetic field will be provided or generated by a magnetic device such as a permanent magnet or an electromagnet. Magnetic sensor 50 can be arranged to output a first electrical signal when sensing strength of a magnetic flux over a threshold value and to output a second electrical signal when sensing strength of a magnetic flux below a threshold value.

The washer or magnetic member 24 can be formed of or comprise a ferromagnetic material that will channel or guide a magnetic flux originating from the magnetic device 48 to the magnetic sensor 50. It can also be formed of a material which is capable of being magnetized upon application of an external magnetic field, but which returns to a nonmagnetic condition when the field is removed. For example, the magnetic member 24 may be formed of a ferrous material, such as 1010 or 1018 steel, having a thickness in the range of 0.5-1.5 mm, and is preferably approximately 1.0 mm thick. In various embodiments the magnetic member 24 can be rectangular as indicated by dash and dot lines in Fig. 6 or have any other suitable outline. The radially extending protrusions may be rectangular as shown in Fig. 5 - Fig. 7 or have rounded corners or other shapes suitable to guide the magnetic flux efficiently to and from the washer.

The magnetic sensor 50 and the magnetic device 48, should it be an electromagnet or other electrically powered device, are connected to and will be controlled by the control unit 28. The power source 31 is connected to the magnetic sensor 50, the magnetic device 48, the control unit 28 and the radio unit 30 to provide any required electric power.

Fig. 4 shows in further detail the coaxial arrangement with the spindle 20, the washer 24 and the circular plate 22. Also shown is the power source 31, the radio unit 30 and the control unit 28 arranged on the base 18 under the cover 16. Only a minor portion of the handle 12 is shown in Fig. 4. As further shown in Fig. 4 the magnetic device 48 and the magnetic sensor 50, respectively, are arranged close to the first protrusion 44 and the second protrusion 46 extending from washer 24.

A basic embodiment of an angular position detector for a rotating member in accordance with the invention is shown in Fig. 5. It comprises magnet device 48 and magnetic sensor 50 arranged opposite each other. The magnetic member formed as a washer 24 is arranged in a central position between magnet device 48 and magnetic sensor 50. The first protrusion 44 and second protrusion 46 extend in diametrically opposite directions. In the handle position shown in Fig. 5 first protrusion 44 is in position in front of magnetic device 48 and second protrusion 46 is in position in front of magnetic sensor 50.

In embodiments where the magnetic device 48 is a permanent magnet there are no electrical connections between the magnetic device and the control unit 28. The connection in Fig. 5 therefore is shown with a dashed line. Magnet device 48 can be magnetically polarized in a direction in parallel with base 18 or perpendicular to base 18. The magnetic field generated still will extend into washer 24. The magnetic sensor 50 can be arranged at other angular positions, for instance with an angle of 90° to magnetic device 48 as shown by dash and dot line in Fig. 5.

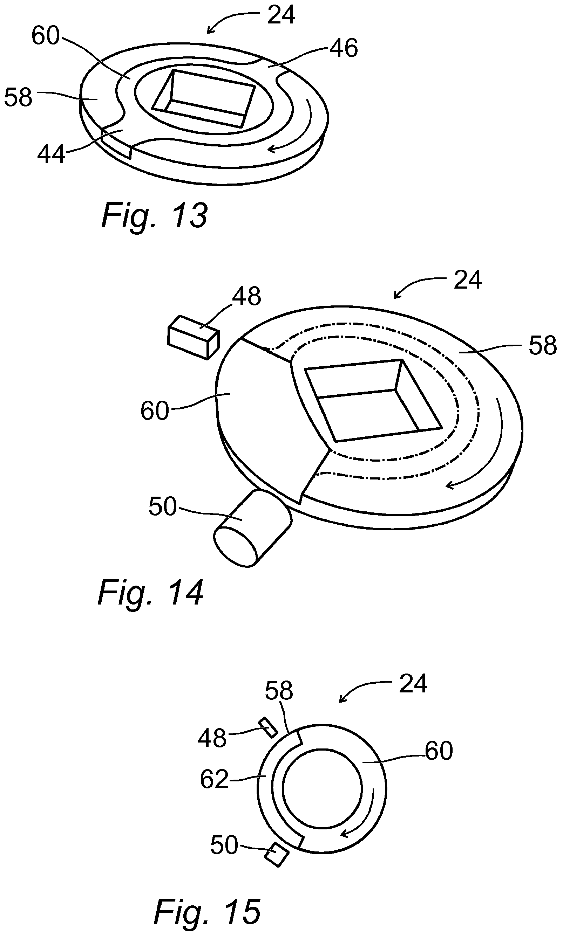

A magnetic flux originating from magnet device 48 will bridge over a small air gap and into first protrusion 44, and continue through magnetic member 24 as indicated by dashed lines 52 into second protrusion 46. Finally, magnetic flux will continue through second protrusion 46, bridge over a small air gap and into magnetic sensor 50 where a signal indicating the magnetic flux is produced. Other angular positions, except for a position when spindle 20 has rotated 180 degrees, will not result in a magnetic flux of similar strength. Thus, this specific angular position, which can correspond to a locked position, will be indicated by the signal from magnetic sensor 50. It should be noted that the magnetic member 24 does not need to form a closed path for the magnetic flux, c.f. Fig. 14 and corresponding description below.

Magnetic sensor 50 is connected to control unit 28 and further to power source 31 to be provided with any required power. Magnetic sensor 50 can be a Hall effect sensor or similar transducer that outputs a signal in response to a magnetic field. In various embodiments magnetic sensor is based on magnetoresistive effects, such as SM351 LT and SM353LT sensors available from HONYWELL, or MRMS201A and MRMS205A available from MURATA. In various embodiments the magnetic device 48 is an electromagnet or similar electrically powered device. The magnetic device 48 then is connected to power source 31 as shown by a dashed line in Fig. 5.

Control unit 28 is connected to power source 31 and further to radio unit 30. In various embodiments control unit 28 and radio unit 30 are combined in one electronic device. The signal from magnetic sensor 50 indicating the specific angular position of washer 24 is received by control unit 28 and transferred to radio unit 30, optionally after being analysed in control unit 28. A corresponding radio signal then can be transmitted from radio unit 30 to a central unit 54 for further processing.

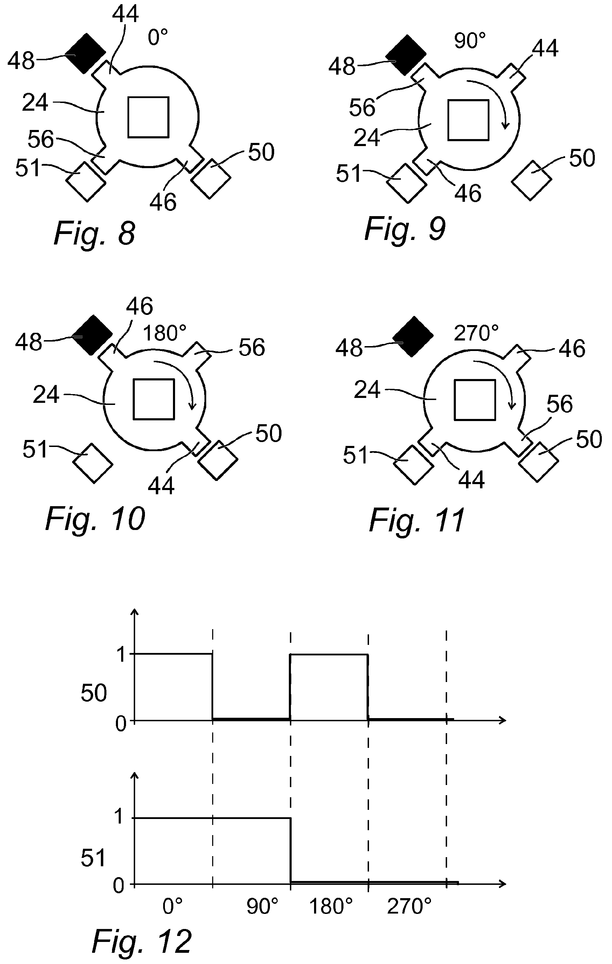

While a basic embodiment in accordance with the invention is shown in Fig. 5 a further improved embodiment is shown in Fig. 6. In this embodiment magnetic sensor 50 is a first magnetic sensor and a second magnetic sensor 51 is arranged at an angular displacement from said first magnetic sensor 50. The angular displacement in this embodiment is 90 degrees. In the embodiment shown in Fig. 5 there is provided also a third radially extending protrusion 56 at a 90 degrees angular displacement from second radially extending protrusion 46. Second magnetic sensor 51 is connected to control unit 28 for signalling when sensing a magnetic field from third radially extending protrusion 56. Second will make it possible to obtain further angular positions of washer 24 as further disclosed below with reference to Fig. 8 - Fig. 11. Said magnetic device 48, said first magnetic sensor 50 and said second magnetic sensor 51 are all arranged on one circular path as indicated by a dashed line in Fig. 6 around axis 36.

In various embodiments the number and positioning of magnetic sensor 50 and 51, magnetic device 48 and protrusions 44 and 46 are combined in different configurations. As an example in the embodiments shown in Fig. 6 and 7 the single magnetic device and multiple magnetic sensors can be replaced by a single magnetic sensor and multiple magnetic devices. The positioning of magnetic sensor and multiple magnetic devices can be varied as indicated in Fig. 7 depending on the number of angular positions that need to be detected and on other conditions.

Orientation or positioning of the radially extending protrusions and corresponding magnetic sensors can be varied in dependence of need for sensing different angular positions of the handle. Some examples are shown in Fig. 7. In various embodiments first radially extending protrusion 44 and second radially extending protrusion 46 are arranged with an angular displacement of 180°, angle s, as shown in Fig. 7, but also the configuration of first radially extending protrusion 44 and second radially extending protrusion 46 can be selected in view of specific conditions. Third radially extending protrusion 56 is formed at an angle a from first radially extending protrusion 44. In the shown embodiment angle a < 90°. A fourth radially extending protrusion 57 is formed at an angle b from first radially extending protrusion 44. Optionally, there is provided also a third magnetic sensor 53. The angular positions of second magnetic sensor 51 third magnetic sensor 53 are determined by the specific angles, resolution and other specifications that are of interest in each application. Also the configuration and number of radially extending protrusion can be selected in view each application.

Fig. 8 to Fig. 11 show the washer 24 rotated 0°, 90°, 180° and 270°, respectively. In Fig. 12 two diagrams show the signals generated in first magnetic sensor 50 and second magnetic sensor 51, respectively, at the angles indicated in Fig. 8 to Fig. 11. Fig. 8 shows a start position at 0° where first radially extending protrusion 44 is in front of magnetic device 48, second radially extending protrusion 46 is in front of first magnetic sensor 50, and third radially extending protrusion 56 is in front of second magnetic sensor 50. As shown in Fig. 12 a full signal is generated in first magnetic sensor 50 as well as in second magnetic sensor 51. The signals from first magnetic sensor 50 and second magnetic sensor 51 are received by control unit 28 (not shown here) and can be used to indicate a locked position of handle.

Fig. 9 shows a first rotated position at 90° where first radially extending protrusion 44 has rotated away from magnetic device 48, second radially extending protrusion 46 is in front of second magnetic sensor 51, and third radially extending protrusion 56 is in front of magnetic device 48. As shown in Fig. 12 a full signal is generated in second magnetic sensor 51 while no signal is generated in first magnetic sensor 50. The signals from first magnetic sensor 50 and second magnetic sensor 51 are received by control unit 28 (not shown here) and can be used to indicate a first open position of handle.

Fig. 10 shows a second rotated position at 180° where first radially extending protrusion 44 is in a position in front first magnetic sensor 50, second radially extending protrusion 46 is in front of magnetic device 48, and third radially extending protrusion 56 has rotated away from magnetic device 48. As shown in Fig. 12 a full signal is generated in first magnetic sensor 50 while no signal is generated in second magnetic sensor 51. The signals from first magnetic sensor 50 and second magnetic sensor 51 are received by control unit 28 (not shown here) and can be used to indicate a second open position of handle.

In the rotational position shown in Fig. 11 none of first radially extending protrusion 44, second radially extending protrusion 46 and third radially extending protrusion 56 is in position in front of magnetic device 48 and thus no or only a minor magnetic flux will go through the washer 24. As a result and as shown in Fig. 12 neither first magnetic sensor 50 nor second magnetic sensor 51 will generate a signal. Absence of a signal from first magnetic sensor 50 and second magnetic sensor 51 in control unit 28 (not shown here) can be used to indicate a third open position of handle.

The alternative embodiment of washer 24 shown in fig 13 comprises a circular portion 58 and an insertion 60. Circular portion 58 supports the insertion 60 and can be formed by a plastic material or other non-magnetic material. Insertion 60 is made from a ferromagnetic material suited for guiding a magnetic flux. In this embodiment the insertion 60 is formed with first radially extending protrusion 44 and second radially extending protrusion 46.

A further alternative embodiment of washer 24 is shown in Fig. 14. This embodiment is similar to the embodiment shown in Fig. 13 and comprises a circular portion 58 and an insertion 60. The insertion 60 in this embodiment substantially has the form of a circle sector extending over a fixed angle. In this embodiment magnetic device 48 and magnetic sensor 50 are arranged in an angular relationship corresponding to the fixed angle extension of the circle sector. The angle extension and angular relationship for instance can be 90°. Insertion 60 can be extended to form a ring as indicated by dash and dot line in Fig. 14.

Fig. 15 illustrates an embodiment which has an inverted function as compared to embodiments shown in other drawings. Similar to the embodiment shown in Fig. 14 washer 24 comprises a circular portion 58 and an insertion 60. Insertion 60 is formed as a ring having a cut of portion 62. As shown in Fig. 15 cut of portion 62 can have the form of a sector of a ring. The angular position detector of Fig. 15 will have an inverted function as compared to embodiments disclosed above. In the angular position shown in Fig. 15 a minimum magnetic flux will be guided from the magnetic device 48 to the magnetic sensor 50. This minimum or absence of magnetic flux will be detected by magnetic sensor 50 and will be indicative of the shown position, which can correspond to a locked position of a handle. In other angular positions a stronger or presence of magnetic flux will be detected by magnetic sensor 50 to indicate that handle is not in locked position.

While certain illustrative embodiments of the invention have been described in particularity, it will be understood that various other modifications will be readily apparent to those skilled in the art without departing from the scope and spirit of the invention. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. An angular position detector (11) adapted for a rotating member (20) rotating around an axis, said angular position detector (11) comprising a magnet device (48) and a magnetic sensor (50), ***characterised* in**
**that** the angular position detector (11) comprises at least one first magnetic sensor (50),
**that** said magnetic device (48) and said at least one first magnetic sensor (50) are arranged in a fixed angular relationship to each other on a circular path coaxial with said axis,
**that** a magnetic member (24) enclosing at least partially and rotating together with said rotating member (20) is arranged to provide a magnetic coupling between said magnetic device (48) and said at least one first magnetic sensor (50) in at least one specific rotational position, wherein said at least one first magnetic sensor (50) is arranged to output an electrical signal in response to sensing strength of a magnetic flux originating from said magnetic device (48) and extending through said magnetic member (24).

2. The angular position detector (11) as claimed in claim 1, wherein said magnetic member (24) is provided with at least a first radially extending protrusion (44) and a second radially extending protrusion (46) arranged in a fixed angular relationship to each other.

3. The angular position detector (11) as claimed in claim 1 or claim 2, wherein said magnetic member (24) is made from ferromagnetic material.

4. The angular position detector (11) as claimed in claim 1 or claim 2, wherein said magnetic member (24) is formed as a washer having a central opening for receiving said rotating member (20).

5. The angular position detector (11) as claimed in claim 1, wherein said magnetic member (24) comprises a circular disc (58) and an insertion (60) arranged centrally in said circular disc (58), wherein said circular disc (58) is made from non-magnetic material and said insertion (60) is made from magnetic or ferromagnetic material.

6. The angular position detector (11) as claimed in claim 1, wherein a second magnetic sensor (51) is arranged in a fixed angular relationship to said magnetic device (48) and to said at least first magnetic sensor (50) and at the same circular path as said magnetic device (48) and said at first magnetic sensor (50).

7. The angular position detector (11) as claimed in claim 2, wherein said magnetic member (24) provided with a third radially extending protrusion (56) arranged in a fixed angular relationship to said first radially extending protrusion (44) and to second radially extending protrusion (46).

8. The angular position detector (11) as claimed in claim 2, wherein said first radially extending protrusion (44) is arranged at an angle of 180° to second radially extending protrusion (46).

9. The angular position detector (11) as claimed in claim 7 and claim 8, wherein , wherein said third radially extending protrusion (56) is arranged at an angle of 90° to second radially extending protrusion (46) and at an angle of 90° to said first radially extending protrusion (44).

10. The angular position detector (11) as claimed in claim 2, wherein said first radially extending protrusion (44) is arranged at an angle of 90° to second radially extending protrusion (46).

11. The angular position detector (11) as claimed in claim 6, wherein the fixed angular relationship between said at first magnetic sensor (50) and said second magnetic sensor (51) is 90°.

12. The angular position detector (11) as claimed in claim 1, wherein said at least one first magnetic sensor (50) is connected to a control unit (28) for sending the electrical signal in response to sensing a magnetic flux, wherein said control unit (28) is connected to a radio unit (30), said radio unit (30) transmitting a radio signal indicative of the received electrical signal received from said first magnetic sensor (50).

13. The angular position detector (11) as claimed in claim 1, wherein said magnetic member (24) extends in a closed loop to enclose completely said rotating member (20).

14. The angular position detector (11) as claimed in claim 1, wherein said at least one first magnetic sensor (50) is arranged to output a first electrical signal when sensing strength of a magnetic flux over a threshold value and to output a second electrical signal when sensing strength of a magnetic flux below a threshold value.
